Europäisches Patentamt

European Patent Office

Office européen des brevets

(11) Publication number : **0 490 568 A1**

# (12) EUROPEAN PATENT APPLICATION

(21) Application number : 91311273.6

(22) Date of filing : 04.12.91

(51) Int. Cl.⁵ : **F16L 11/08**

(30) Priority : 07.12.90 GB 9026655

(43) Date of publication of application :
17.06.92 Bulletin 92/25

(84) Designated Contracting States :
BE DE GB LU NL

(71) Applicant : PENNINE ACTUATORS LTD.,
Brunswick House, South Street
Halifax, HX1 2EL (GB)
(71) Applicant : DOWTY WOODVILLE POLYMER
LIMITED
Hearthcote Road, Swadlincote
Burton-on-Trent, Staffordshire, DE11 9DX (GB)

(72) Inventor : Cook, William Turvey
Westcroft, Heath Avenue
Halifax HX3 0EL (GB)
Inventor : Maybury, Alan
375 Street Lane
Leeds LS17 6SE (GB)
Inventor : Weatherby, Nicholas Leo
11 Rolleston Drive
Lenton, Nottingham NG7 1JS (GB)
Inventor : Shrubsall, Peter Rickard
43 Campion Hill
Castle Donnington, Derby DE7 2XH (GB)

(74) Representative : Newby, John Ross et al
J.Y. & G.W. Johnson Furnival House 14/18 High
Holborn
London WC1V 6DE (GB)

(54) Improved hose and method of manufacture thereof.

(57) A peristaltic hose is made by chemically
bonding a sleeve (15) of wrapped turns of fibr-
ous mesh material (14) to an inner core (12) of
polychloroprene type rubber. The mesh ma-
terial (14) has one set of parallel fibrous runs
(14a) extending longitudinally to the axis of the
hose and a second set of parallel fibrous runs
(14b) extending transversely to the axis. A mini-
mum overlap between turns of the sleeve (15)
and staggering of butt joints (13, 17) in the core
(12) and outer layer (16) give a hose with little
tendency to bow out of a linear disposition on
pressurisation.

EP 0 490 568 A1

This invention relates to a fluid pressure power actuator and in particular to the pressurised fluid-containing drive hose of such an actuator. The invention is expected to find particular utility in the manufacture of linear peristaltic pneumatic motors.

GB-A-1358361 discloses a fluid pressure power actuator in which a carrier moves end to end of a hose under the influence of pressurised air admitted to the interior of the hose, alternately from one end and then the other. The carrier provides an opposed pair of rollers which nip the hose, whereby motive force is applied to the carriage as the nip separates the high pressure end of the hose from the low pressure end and moves towards the low pressure end.

The critical component of a power actuator as described in GB-A-1358361 is the drive hose. For reliable long life it must remain dimensionally stable under the repeated pressurisations and the flexings caused by the moving nip. It must withstand temperature rises generated by internal friction as the hose flexes repeatedly. It must resist loss of resilience due to natural aging of the hose and by attack from the compounds with which it comes into contact in use. It must resist any tendency for bowing away from a linear disposition on internal pressurisation up to 7.0 kg/cm$^2$ gauge (100 psi).

Prior art drive hoses, even those constructed in the manner described in GB-A-1358361, fail after an undesirably short working life and the wider acceptance of peristaltic motors has been impeded by the limitations imposed by prior art hoses.

Other examples of prior art hose construction can be found in GB Patent Specification 916706, United States Patents 4880036, 4617213 and 3724807 and European Patent Application 0325470.

This invention relates to an improved hose which meets the aforesaid requirements of stability, low hysteresis and resilience and to a method of making such a hose.

According to one aspect of the invention a peristaltic drive hose comprises an annular inner core and an outer coating layer of elastomeric material with an intermediate tubular sleeve comprising a plurality of wrapped turns of fibrous mesh material coated with elastomeric material, and is characterised in that the elastomeric coating is chemically bonded to the fibrous mesh material and that adjacent turns of the said mesh material and the said inner core and outer coating layer are consolidated into a single integral structure. The mesh material has one set of parallel fibrous runs extending longitudinally to the axis of the hose and a second set of parallel fibrous runs extending transversely to the axis. The resiliency of the elastomeric material should be at least 50%, and preferably lies in the range 50-65%, as measured by a Lupke Pendulum Rebound Test BS 903 pt A8 1963.

Suitably the elastomeric material is a polychloroprene type rubber, preferably with a hardness (IRHD) between 40 and 60 IRHD.

The fibrous mesh material used for the sleeve is conveniently a woven Nylon 66 fabric and the chemical bond between it and the elastomeric coating is suitably achieved by adding a bonding agent (e.g. an isocyanate) to the first coating layer applied to the mesh material.

The consolidation of the plurality of turns of the elastomeric coated fibrous mesh material with the elastomeric inner core and outer coating layer is suitably achieved by vulcanising the assembly at elevated temperature and pressure.

Suitably the hose is serviceable in an ozone concentration up to a maximum of 50 parts $0_3$ to $10^8$ parts of air. Desirably the oil resistance of the hose meets the requirements for general oil resistance of ASTM-SAE Type S - Class SC5.

According to a further aspect of the invention a method of making a drive hose for a peristaltic motor comprises forming a sleeve by wrapping a plurality of turns of a fibrous mesh material coated with uncured elastomeric material on an annular core layer of uncured elastomeric material, overlaying the wrapped turns with an annular coating layer of uncured elastomeric material, subjecting the assembled layers to heat and pressure to cure the elastomeric material and chemically bond the elastomeric coating layers to the fibrous mesh material and consolidate the whole into a single integral structure. The fibrous mesh material has one set of parallel fibrous runs extending longitudinally to the axis of the hose and a second set of parallel fibrous runs extending transversely to the axis.

Suitably the inner core and outer coating layers are of calendered polychloroprene type rubber and the fibrous mesh material is a woven cloth of Nylon 66. The elastomeric coating on the fibrous mesh material is suitably a polychloroprene type rubber which is applied on both sides in several coating layers. The chemical bond between the fibrous mesh material and the elastomeric coating is desirably achieved by adding a suitable bonding agent (e.g. an isocyanate) to the first elastomeric coating layer applied to the mesh material onto each side. Desirably the total coating of elastomer on each side of the mesh material is between 2 and 10 thou thickness (between 0.05 and 0.25 mm), suitably between 3 and 7 thou (0.08 and 0.18 mm) and preferably around 4 thou (0.1 mm). Desirably the weight of the fibrous mesh material is between 3 and 5 oz/sq.yd. (100 and 170 g/sq.m.) and preferably 4 oz/sq.yd. (135 g/sq.m.).

Desirably there are three turns of fibrous mesh material in the sleeve and the width of the overlap on the fourth turn subtends less than 90° at the axis of the hose and suitably less than 10°. A sleeve having less than three turns of the preferred mesh material tends to give rise to a radial asymmetry, the overlap creating an unbalancing effect whereby on pressurising the hose, the hose flexes axially away from a linear disposition.

A density of 4 oz./sq.yd. (135 g/sq.m.) is preferred for the mesh material since three turns can be used in the sleeve to provide an appropriate degree of reinforcement without excessive rigidity. Fewer turns of a denser mesh material (e.g. 6 oz/sq.yd. (200 g/sq.m.) or 8 oz./sq.yd. (270 g/sq.m.)) work less well (because of the unbalancing effect), and more turns of a less dense material fail to give the desired resiliency to the hose.

Preferably the inner core layer is provided by wrapping one turn of an accurately dimensioned sheet of calendered rubber around a central mandrel and the outer coating layer is provided by similarly wrapping a sheet of calendered rubber around the wrapped turns of elastomeric coated fibrous mesh material forming the sleeve. Suitably the butt joint between ends of the sheet forming the inner core layer lies in the same axial plane as the butt joint of the outer coating layer, but on the opposite side of the axis (i.e. the butt joints are displaced 180° from one another around the axis of the hose).

Curing under heat and pressure can conveniently be effected by wrapping the tubular assembly of inner core layer, sleeve of mesh material and outer coating layer with a webbing which will shrink under the conditions of cure. With the preferred materials a cure cycle of some 60 minutes, at typically 60 lbs./in$^2$ (4.2 kg/cm$^2$) pressure, with a typical temperature of 150°C produces the required properties.

The invention will now be further described, by way of example with reference to the accompanying drawings, in which:

Figures 1, 2 and 3 show stages in the method of manufacture of a hose according to the invention, and

Figure 4 is a schematic cross-sectional view of the components of the hose assembled ready for curing.

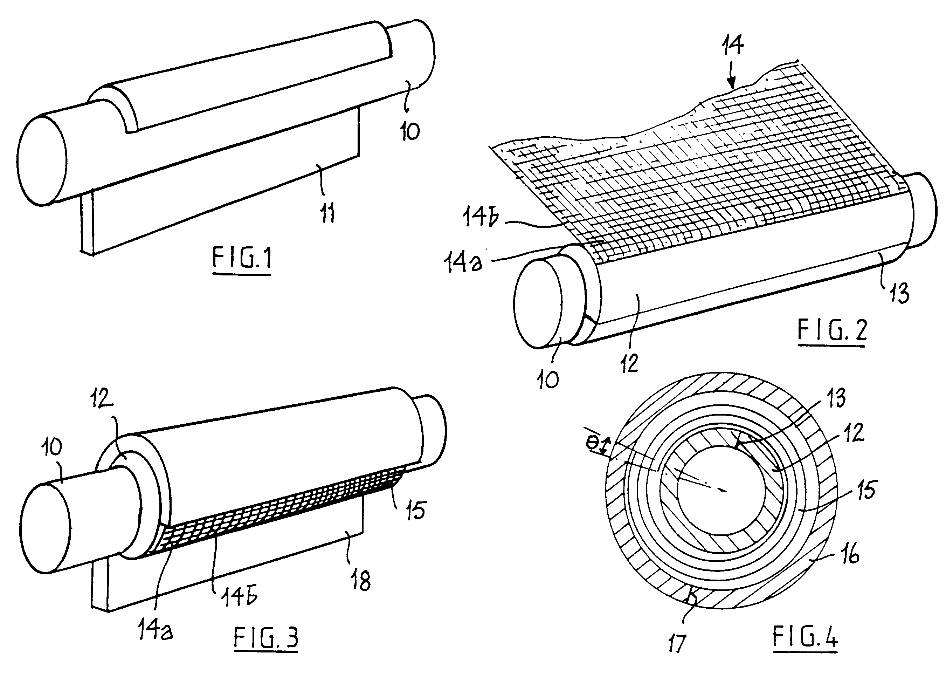

Referring to Figures 1 to 3, a polished mandrel 10 is coated with release agent (e.g. silicone DP 200) and liquid polychloroprene which is allowed to dry. An accurately cut sheet 11 of calendered polychloroprene uncured rubber is wrapped round the mandrel to form a core 12 with a butt joint 13 (see Figures 2 and 4). The mandrel 10 is turned 90° clockwise and a length 14 of Nylon 66 fabric (cut to provide three turns plus a small overlap) coated with an isocyanate bonding agent and 0.1 mm of liquid rubber on each side, is laid as three turns on the core 12 to form a sleeve 15. The mandrel 10 is turned a further 90° clockwise and a further cut-to-length sheet 18 of calendered uncured rubber is laid on to form a coating layer 16 with a butt joint 17.

The mesh material 14 used, as is shown in Figures 2 and 3, is wound on the core 12 to leave one set of parallel fibrous runs (14a) extending longitudinally to the axis of the hose and a second set of parallel fibrous runs (14b) extending transversely to the axis.

The construction created is shown schematically in Figure 4, the overlap subtending an angle Θ° at the axis of the hose (which as shown is around 7°).

This construction is now wrapped with wet nylon webbing (e.g. 70 mm wide) and is placed in an autoclave for vulcanising. During the cure cycle which is typically 60 minutes at 60 lbs/sq.in. (4.2 kg/sq.m.) pressure and 150°C temperature the webbing shrinks and assists in consolidating the structure.

Once cured, the hose is allowed to cool. The nylon tape is removed and the hose is blown off the mandrel with compressed air.

The hose now goes through inspection and pressure testing. Pressure testing involves inflating the tube with water at 5.6 kg/cm$^2$ gauge (80 psi). Essentially the tube should not show any signs of leakage and should not bow laterally during inflation.

Desirably, for a hose of outer diameter 50 mm and inner diameter 42 mm, the radial thickness of the core 12 should be between 0.25 mm and 1.5 mm, preferably between 0.8 and 1.0 mm. Less than 0.25 mm thickness and excessive permeability results. Above 1.5 mm premature failure results.

The mesh fabric 14 desirably has a woven weight in the range 100 to 170 g/sq.m. and desirably is coated (e.g. with polychloroprene) on each side to a thickness in the range 0.05 to 0.25 mm.

Mesh fabric 14 of a woven weight of 135 g/sq.m. is particularly preferred with a polychloroprene coating thickness of around 0.10 mm on each side. Three layers of 135 g/sq.m. spread fabric 14 are felt to be important. Using two layers and there is not enough strength. Using four layers and the hose is too thick and stiff and premature failure results. We have found three layers of 135 g/sq.m. fabric to perform better than 2 layers of 200 g/sq.m. or 270 g/sq.m. material because of the unbalancing effect. The unbalancing effect is due to the overlap or underlap that occurs when a core tube is wrapped, for example a core tube 12 that is wrapped once with a small overlap will exhibit reinforcing of one layer over most of the cross-section and a reinforcing of two layers at the overlap. This means it will exhibit a reinforcing ratio of 2:1.

The effect of a 2:1 reinforcing ratio (due to using one wrap), and of 3:2 (due to using two wraps) of fabric is to cause the hose to bend under 4.2 g/cm$^2$ internal pressure. The effect of 4:3 fusing three layers) is to have enough strength and stability to prevent deviation under pressure. The size of this overlap is important. We try to keep it less than 10° (preferably less than 5°) but the hose would be satisfactory for some uses with a greater overlap than 20°.

The external calendered rubber layer 16 is to prevent the coated textile from prematurely abrading. We have found that it increases the life of the hose, but it could be considerably thinner than the core tube 12 and sensibly dispensed with in an extreme case. This outer layer 16 becomes a problem if it gets too thick, i.e. exceeds 2.0 mm. In this instance the extra compression exerted on the internal wall, as the tube is being compressed, can lead to premature failure.

The cured hardness of the hose is desirably between 40 and 60 on the BS 903 A26 (IRHD) scale and preferably is around 45. It should have an ozone resistance meeting BS 903 pt A43 (i.e. no cracking with 100 pphm $O_3$ at 40°C under 5% strain for 3 days). The oil swell resistance measured in accordance with BS 903 A16 (ASTM No. 3 Oil, 70 hours at 100°C) is desirably between 40% and 100% and preferably 80%.

A test rig embodied a power actuator of the kind described in GB-A-1358361 having a guided carriage movable over a stroke length of some 1000 mm as a hose under test was pressurised from one end and undertook a return stroke of the same length as the hose was pressurised from the other end. Using compressed air at 7 kg/cm² (gauge) and a suitable switchover arrangement for the compressed air the unloaded carriage was reciprocated end-to-end of the hose at a rate of approximately 50 cycles per minute (i.e. 100 strokes per minute, each 1 metre long). Hoses in accordance with the invention will complete at least $5 \times 10^5$ cycles on such a test rig without failure. Test runs in excess of $10^6$ cycles without failure are also to be expected.

## Claims

1. A peristaltic drive hose having an axis with an annular inner core (12) and an outer coating layer (16) of elastomeric material with an intermediate tubular sleeve (15) formed from a plurality of wrapped turns of fibrous mesh material (14) coated with elastomeric material, the elastomeric coating being chemically bonded to the fibrous mesh material with adjacent turns of said mesh material and said inner core and outer coating layer consolidated into a single integral structure, characterised in that the mesh material (14) has one set of parallel fibrous runs (14a) extending longitudinally to the axis of the hose and a second set of parallel fibrous runs (14b) extending transversely to the axis.

2. A hose as claimed in claim 1, characterised in that the resiliency of the elastomeric material lies in the range 50 to 65% (Lupke).

3. A hose as claimed in claim 1 or claim 2, characterised in that, the elastomeric material is a polychloroprene type rubber.

4. A hose as claimed in claim 3, characterised in that the rubber has a hardness between 40 and 60 IRHD.

5. A hose as claimed in any one preceding claim, characterised in that the fibrous mesh material (14) used for the sleeve (15) is a woven fabric and the chemical bond between it and the elastomeric coating is achieved by adding a bonding agent to the first coating layer applied to the mesh material.

6. A hose as claimed in claim 5, characterised in that the woven fabric is a nylon mesh material and the bonding agent is an isocyanate.

7. A hose as claimed in any one preceding claim, in which the consolidation of the plurality of turns of the elastomeric coated fibrous mesh material (14) with the elastomeric inner core (12) and outer coating layer (16) is achieved by vulcanising the assembly at elevated temperature and pressure.

8. A method of making a drive hose having a longitudinal axis for a peristaltic motor which includes the steps of forming a sleeve (15) by wrapping a plurality of turns of a fibrous mesh material (14) coated with uncured elastomeric material on an annular core layer (12) of uncured elastomeric material, overlaying the wrapped turns with an annular coating layer (16) of uncured elastomeric material, and subjecting the assembled layers to heat and pressure to cure the elastomeric material and chemically bond the elastomeric coating layers to the fibrous mesh material and consolidate the whole into a single integral structure, characterised by the step of using as fibrous material (14) a mesh having one set of parallel fibrous runs (14a) extending longitudinally to the axis of the hose and a second set of parallel fibrous runs (14b) extending transversely to the axis.

9. A method as claimed in claim 8, characterised in that the inner core (12) and outer coating layer (16) are of calendered polychloroprene type rubber.

10. A method as claimed in claim 8 or 9, characterised in that the fibrous mesh material (14) is a woven cloth of nylon.

11. A method as claimed in any one of claims 8 to 10, characterised in that the elastomeric coating on the fibrous mesh material (14) is a polychloroprene type rubber which is applied on both sides in several coating layers.

12. A method as claimed in claim 13, characterised in that the chemical bond between the fibrous mesh material (14) and the elastomeric coating is achieved by adding a suitable bonding agent to the first elastomeric coating layer applied to the mesh material on each side.

13. A method as claimed in claim 11 or 12, characterised in that the total coating thickness of elastomer on each side of the mesh material (14) is between 0.05 and 0.25 mm.

14. A method as claimed in any one of claims 8 to 13, characterised in that, the weight of the fibrous mesh material (14) is between 100 and 170 g/sq.m.

15. A method as claimed in any one of claims 8 to 14, characterised in that the inner core (12) is provided by wrapping one turn of an accurately dimensioned sheet (11) of calendered rubber around a central mandrel (10) and the outer coating layer (16) is provided by similarly wrapping a sheet (18) of calendered rubber around the wrapped turns of elastomeric coated fibrous mesh material (14) forming the sleeve (15).

16. A method as claimed in claim 15, characterised in that the butt joint (13) between ends of the sheet (11) forming the inner core (12) lies in the same axial plane as the butt joint (17) of the outer coating layer (16), but on the opposite side of the axis.

17. A method as claimed in any one of claims 8 to 16, characterised in that curing under heat and pressure is effected by wrapping the tubular assembly of inner core, sleeve of mesh material and outer coating layer with a webbing which will shrink under the conditions of cure.

18. A hose as claimed in any one of claims 1 to 7, or a method as claimed in any one of claims 8 to 17, characterised in that there are three turns of fibrous mesh material (14) in the sleeve (15) and the width of the overlap on the fourth turn subtends less than 90° at the axis of the hose.

19. A hose or a method as claimed in claim 18, characterised in that the overlap is less than 10°.

FIG.1

FIG.2

FIG.3

FIG.4

EP 0 490 568 A1

European Patent
Office

**EUROPEAN SEARCH REPORT**

Application Number

EP    91 31 1273

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 267 530 (A. D. MACLACHLAN) | 1,3,7-9, 18,19 | F16L11/08 |
| Y | * page 1, left column, line 45 - right column, line 5 * | 10,17 | |
| A | * page 2, left column, line 28 - line 40 * | 5,15,18, 19 | |
| | * page 2, right column, line 1 - line 10; figures * | | |
| X | US-A-2 984 262 (A. L. AYMAMI   ET AL.) | 1,7,8,18 | |
| A | * column 1, line 20 - line 36 * | 10,17,19 | |
| | * column 2, line 55 - line 65 * | | |
| | * column 3, line 24 - line 40; claims 1,2; figures 1,3,5 * | | |
| Y | US-A-4 385 018 (T. A. KUTNYAK) | 10 | |
| | * column 4, line 5 - line 17; figures 2,3,4,8 * | | |
| Y | BLOW C.M., HEPBURN C. 'RUBBER TECHNOLOGY AND MANUFACTURE' | 17 | |
| | 1982 , BUTTERWORTH SCIENTIFIC , GB, LONDON | | TECHNICAL FIELDS SEARCHED (Int. Cl.5 ) |
| | * page 447, line 10 - line 14 * | | |
| A | EUROPORT 77 | 3,9 | F16L |
| | 18 November 1977, | | |
| | INDUSTRIE PIRELLI SPA.: 'GOLFO 104-SM7154-SP' | | |

The present search report has been drawn up for all claims

| Place of search | Date of completion of the search | Examiner |
|---|---|---|
| THE HAGUE | 03 MARCH 1992 | BUDTZ-OLSEN A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)